# EUROPÄISCHE PATENTSCHRIFT

(11) **EP 2 858 800 B1**
(45) Veröffentlichungstag und Bekanntmachung des Hinweises auf die Patenterteilung: **25.05.2016**
(21) Anmeldenummer: 13734324.0
(22) Anmeldetag: 11.06.2013
(51) Int. Cl.: B29B 9/06

(54) **EINZUGSWALZE FÜR STRANGGRANULATOREN SOWIE VERFAHREN ZUR HERSTELLUNG EINER SOLCHEN**
FEED ROLL FOR STRAND PELLETIZERS AND METHOD FOR PRODUCING SUCH A ROLL
CYLINDRE D'ALIMENTATION POUR GRANULATEURS À JONCS ET SON PROCÉDÉ DE FABRICATION

(30) Priorität: 12.06.2012 DE 102012011636
(43) Veröffentlichungstag der Anmeldung: 15.04.2015
(73) Patentinhaber: Maag Automatik GmbH, 63762 Großostheim (DE)
(72) Erfinder: SCHEURICH, Jochen, 63843 Niedernberg (DE)
(74) Vertreter: Spranger, Stephan
(86) Internationale Anmeldenummer: PCT/EP2013/001713
(87) Internationale Veröffentlichungsnummer: WO 2013/185911

(56) Entgegenhaltungen:
- EP-A1- 0 013 575
- EP-A1- 0 374 812
- WO-A1-2012/109014
- CH-A- 321 434
- DE-A1-102007 016 347
- DE-A1-102008 011 498
- US-A- 3 508 461
- US-A- 4 124 341

## Beschreibung

Die vorliegende Erfindung betrifft eine Einzugswalze zum Einziehen von zu Granulat zu verarbeitenden Kunststoffsträngen in einen Stranggranulator, sowie ein Verfahren zur Herstellung einer Einzugswalze.

In bekannten Verfahren zur Herstellung von Kunststoffgranulat wird Kunststoffmaterial mit einem Stranggießer zu einer Vielzahl von Strängen aus Kunststoffmaterial extrudiert. Nachdem die Kunststoffmaterialstränge abgekühlt und gegebenenfalls einer Strangtrocknung unterworfen wurden, werden die Kunststoffmaterialstränge einem Stranggranulator zugeführt. Ein in dem Stranggranulator vorgesehenes Einzugswerk erfasst die Kunststoffmaterialstränge und führt sie dem Schneidwerk des Stranggranulators zu, wo sie granuliert werden.

Das Einzugswerk eines derartigen Stranggranulators wird dabei üblicher Weise durch zwei Einzugswalzen gebildet, welche so angeordnet sind, dass die Kunststoffmaterialstränge zwischen den Oberflächen der Einzugswalzen geklemmt werden. Zumindest eine der zwei Einzugswalzen wird durch eine Antriebsvorrichtung angetrieben und in Drehung versetzt, um die zwischen den Einzugswalzen geklemmten Kunststoffmaterialstränge einzuziehen und in Richtung des Schneidwerkzeugs zu befördern.

Im einfachsten Fall sind die Einzugswalzen aus Metall, wie zum Beispiel Edelstahl, gefertigt. Auf Grund der hohen Festigkeit des Metalls weisen derartige Einzugswalzen eine hohe Standfestigkeit auf und sind damit relativ Wartungsarm. Darüber hinaus ist das Metallmaterial ein sehr guter Wärmeleiter, was den Vorteil hat, dass von dem Kunststoffstrangmaterial aufgenommene Wärme gut abgeleitet werden kann.

Diese Einzugswalzen aus Metall weisen den Nachteil auf, dass deren Oberfläche nur einen sehr geringen Reibwert aufweist. Die Einzugswalzen müssen daher zur Führung der Kunststoffstränge profiliert sein, z.B. mit einer Rändelung, wie etwa einer Kreuzrändelung versehen sein, und/oder auf die Kunststoffstränge eine relativ hohe Normalkraft ausüben, um genügend Reibung für eine zufriedenstellende Qualität des Einzugsverhaltens zu erzielen. Diese hohe Normalkraft kann in vielen Fällen zu einer unerwünschten Verformung und Abplattung der Kunststoffmaterialstränge führen. Da die metallischen Einzugswalzen zudem nicht elastisch sind, sind sie auch nicht in der Lage, sich jeweils lokal an die vielen einzelnen Kunststoffmaterialstränge anzupassen, die gleichzeitig eingezogen werden. Dies kann dazu führen, dass die Einzugswalze auf einen ersten Kunststoffmaterialstrang eine relativ große Normalkraft ausübt und diesen beim Einziehen dadurch deutlich verformt, während ein anderer Kunststoffmaterialstrang, der eine gering kleinere Dicke aufweist, nur wenig oder gar nicht von der Einzugswalze mit Kraft beaufschlagt wird und daher nur einer geringer oder sogar keiner Einzugskraft unterworfen wird. Dies kann daher dazu führen, dass sich das Einzugsverhalten für die vielen Kunststoffmaterialstränge deutlich unterscheiden kann, was unerwünscht ist.

Im Stand der Technik war es ebenfalls bekannt, Einzugswalzen zu verwenden, bei denen auf einem Walzenkern aus Edelstahl oder einem anderen metallischen Material eine Ummantelung aus einer Polyurethanbeschichtung aufgebracht ist. Polyurethan weist Im Vergleich zu Metall einen wesentlich höheren Reibwert auf, was den Vorteil hat, dass eine mit Polyurethan ummantelte Einzugswalze eine geringere Normalkraft auf die Kunststoffmaterialstränge auszuüben braucht, um dieselbe Einzugskraft wie eine Metalleinzugswalze auszuüben. Dies hat den Vorteil, dass die Kunststoffmaterialstränge weniger verformt werden. Darüber ist Polyurethan ein elastisches Material. Die Polyurethanummantelung gibt daher an den Stellen, an denen die Einzugswalze auf die Kunststoffmaterialstränge drückt, leicht nach und verformt sich. Auf diese Weise kann sich die Polyurethanummantelung daher lokal der Form der Kunststoffmaterialstränge zu einem gewissen Grad anpassen. Im Ergebnis kann daher eine gleichmäßigere Kraftausübung auf die Kunststoffmaterialstränge und damit ein gleichmäßigeres Einziehen der vielen Kunststoffmaterialstränge erzielt werden, wodurch ein qualitativ gutes und gleichmäßiges Einzugsverhalten erreicht wird.

Polyurethan weist im Vergleich zu Metall eine geringere Festigkeit auf, was dazu führt, dass die mit Polyurethan ummantelten Einzugswalzen mit der Zeit an der Oberfläche abnutzen und verformen, indem sich Rillen an der Oberfläche ausbilden. Diese Rillenbildung kann dazu führen, dass einzelne Kunststoffmaterialstränge von der Einzugswalze nicht mehr oder nur unzureichend geklemmt und eingeführt werden können. Im Ergebnis weisen daher die mit Polyurethan ummantelten Einzugswalzen eine geringere Standfestigkeit auf und erfordern kürzere Wartungs- und Austauschzyklen.

Die europäische Patentanmeldung EP 0 374 812 A1 beschreibt ein Verfahren zur Herstellung expandierbarer Styrolpolymerisate mittels Strangpressens, wobei der Strang dort zwischen einem Walzenpaar, bestehend aus einer elastischen und einer nicht elastischen Walze geführt werden kann.

Es ist daher eine Aufgabe der vorliegenden Erfindung, die obigen Nachteile zu überwinden und eine Einzugswalze bereitzustellen, welche ein gutes Einzugsverhalten und eine hohe Standfestigkeit aufweist, sowie ein Verfahren zur Herstellung einer derartigen Einzugswalze anzugeben.

Die obigen und andere Aufgaben der Erfindung werden durch eine Einzugswalze mit den Merkmalen des Anspruchs 1, sowie ein Herstellungsverfahren mit den Merkmalen des Anspruchs 11 gelöst.

Bevorzugte Ausführungsformen sind in den abhängigen Ansprüchen dargelegt.

Erfindungsgemäß weist eine Einzugswalze für Stranggranulatoren einen metallischen Walzenkern und eine auf dem Walzenkern angeordnete Ummantelung auf, wobei die Ummantelung aus einem Verbund aus einem Kunststoffmaterial und zumindest einem Metallgewebe gebildet ist.

Durch die Armierung mit dem Metallgewebe wird die Einzugswalze an ihrer Oberfläche griffiger, während sie gleichzeitig ein hohes Maß an Elastizität behält. Es wird dadurch ein qualitativ gutes Einzugsverhalten erzielt. Die Kräfte, die von den Kunststoffsträngen beim rollenden Einziehen lokal auf die Ummantelung einwirken, werden vom Metallgewebe aufgenommen und abgeleitet. Das Metallgewebe wirkt daher der Verdrängung von Kunststoffmaterial der Ummantelung und damit der Rillenbildung entgegen, wodurch die Standfestigkeit verbessert wird. Die Wärme, welche durch die heißen Kunststoffstränge eingeleitet wird, sowie die Wärme, die durch die verrichtete Walkarbeit erzeugt wird, kann durch die erhöhte Wärmeleitfähigkeit des Metallgewebes besser in den metallischen Walzenkern abgeleitet werden. Als Ergebnis wird die Einzugswalze temperaturbeständiger. Dadurch wird die Standzeit weiter erhöht.

Das Kunststoffmaterial ist bevorzugt Polyurethan.

Das Metallgewebe wird bevorzugt durch ein Edelstahlmaschengewebe gebildet.

Das Metallgewebe kann in Form eines ringförmig geschlossenen Schlauches ausgebildet sein. Bevorzugt ist das Metallgewebe im Querschnitt der Einzugswalze gesehen in Form einer Spirale ausgebildet, welche den Walzenkern mehrfach umwickelt, etwa zumindest zweifach, dreifach, vierfach, oder fünffach.

Zur weiteren Verbesserung der mechanischen Stabilität, wobei dann bei Umlauf der Einzugswalze erfindungsgemäß bevorzugt nicht immer ein einziger Gewebeteil im Bereich eines zu führenden Strangs zu liegen kommt, kann das zumindest eine Metallgewebe der Einzugswalze in Form einer Wendel ausgebildet sein, d.h. ein z.B. rechtwinklig ausgebildetes Metallgewebe kann in axialer Richtung der Einzugswalze in einem Winkel dazu angeordnet sein.

Die Einzugswalze kann ein einzelnes Metallgewebe aufweisen. Alternativ kann eine Mehrzahl von zwei, drei oder vier Metallgeweben verwendet werden.

Das Metallgewebe ist bevorzugt in einem Bereich zwischen 0,5 mm und 5 mm, bevorzugt in einem Bereich zwischen 1 mm und 3 mm unterhalb einer Oberfläche der Einzugswalze angeordnet. Im Falle einer mehrfachen Umwicklung des Walzenkerns mit einem Metallgewebe und/oder im Fall der Verwendung mehrerer Metallgewebe kann eine oberste Lage oder ein oberster Lagenabschnitt des Metallgewebes in diesem Bereich angeordnet sein.

Der Walzenkern ist bevorzugt aus einem Edelstahl gebildet.

Der Walzenkern ist bevorzugt als eine Hohlwelle bzw. als ein Hohlzylinder ausgebildet.

Ein Verfahren zur Herstellung einer Einzugswalze weist erfindungsgemäß die Schritte auf: Bereitstellen eines metallischen Walzenkerns, Anordnen zumindest eines Metallgewebes auf dem Walzenkern und Vergießen mit einem Kunststoffmaterial zur Ausbildung der Ummantelung.

Bevorzugt wird zur Anordnung des Metallgewebes auf dem Walzenkern das zumindest eine Metallgewebe im Querschnitt der Einzugswalze gesehen spiralförmig auf den Walzenkern aufgewickelt.

Besonders bevorzugt kann das zumindest eine Metallgewebe der Einzugswalze wendelförmig auf den Walzenkern aufgewickelt werden, wobei ein z.B. rechtwinklig ausgebildetes Metallgewebe dabei in axialer Richtung der Einzugswalze in einem Winkel dazu angeordnet wird, so dass sich damit zur weiteren Verbesserung der mechanischen Stabilität dann bei Umlauf der Einzugswalze erfindungsgemäß bevorzugt nicht immer ein einziger Gewebeteil im Bereich eines zu führenden Strangs zu liegen kommt.

Eine Einzugswalze gemäß der Erfindung kann einzeln oder paarweise in einem Stranggranulator zur Verarbeitung von Kunststoffmaterialsträngen zu Granulat eingesetzt werden zum Einziehen der Kunststoffmaterialstränge.

Die Erfindung wird im Folgenden beispielhaft anhand der Figuren beschrieben werden:
- Fig. 1: zeigt eine Einzugswalze gemäß einer Ausführungsform der Erfindung;
- Fig. 2: zeigt eine Einzugswalze gemäß einer zweiten Ausführungsform der Erfindung;
- Fig. 3: zeigt eine Einzugswalze gemäß einer weiteren Ausführungsform der Erfindung; und
- Fig. 4: zeigt eine axiale Draufsicht einer Einzugswalze gemäß einer nochmals weiteren Ausführungsform der Erfindung.

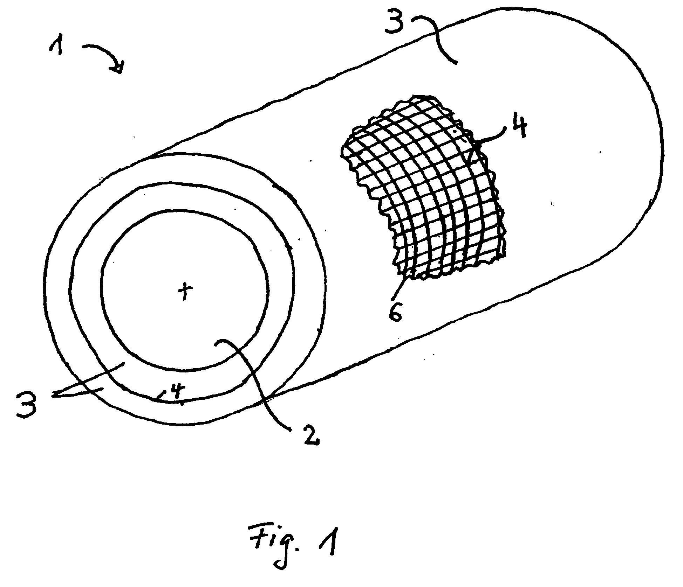

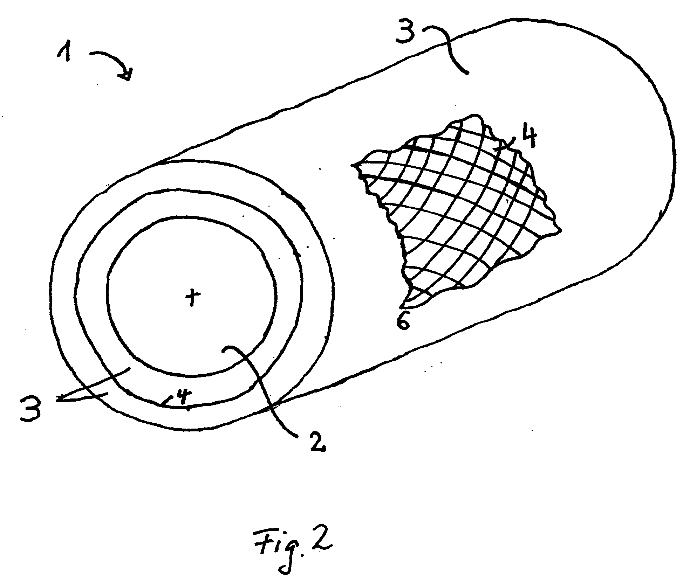

Wie in der Fig. 1 dargestellt, weist eine Einzugswalze 1 gemäß einer ersten Ausführungsform der vorliegenden Erfindung einen metallischen Walzenkern 2 auf, der mit einer Ummantelung 3 umgeben ist. Die Ummantelung 3 ist aus einem Verbund aus einem Kunststoffmaterial, insbesondere Polyurethan, und einem Metallgewebe, insbesondere einem Edelstahlmaschengewebe, gebildet. Das Edelstahlmaschengewebe 4 ist in der Fig. 1 in Form eines zylinderförmig geschlossenen Gewebes ausgebildet. Wie der schematische Ausschnitt 6 in der Ummantelung 3 zeigt, weist das Edelstahlmaschengewebe (Bezugszeichen 4) Maschen bildende Schuss- und Kettdrähte auf, die parallel bzw. senkrecht zur Längsachse der Einzugswalze 1 verlaufen. Auf diese Weise wird eine möglichst symmetrische Aufnahme und Verteilung der Kräfte erzielt, welche durch das Einziehen der Kunststoffmaterialstränge auf die Oberfläche der Ummantelung 3 der Einzugswalze 1 ausgeübt werden. Alternativ können die Schuss- und Kettdrähte auch jeweils 45° relativ zur Längsachse der Einzugswalze 1 gedreht sein, also in einer wendelförmigen Anordnung, wie sie beispielsweise in Fig. 2 gezeigt ist (siehe auch weiter unten). Auch in diesem Fall wird eine möglichst symmetrische Kraftaufnahme und -verteilung erzielt, was zu einer günstigen Kraftaufnahme und Kraftverteilung sowie eine verbesserte Wärmeableitung in axialer Richtung der Einzugswalze 1 vorteilhaft beiträgt.

Die Armierung der Ummantelung 3 mit dem Edelstahlmaschengewebe 4 sorgt auf diese Weise für eine erhöhte Festigkeit der Ummantelung, während gleichzeitig die Elastizität des Polyurethanmaterials der Ummantelung 3 beibehalten wird. Die Ummantelung kann sich daher weiter an den Stellen, an denen die Kunststoffmaterialstränge gegen die Einzugswalze drücken, lokal verformen, insbesondere in radialer Richtung eingedrückt werden, und sich so an die Form der Kunststoffmaterialstränge anpassen. In Umfangsrichtung und in Längsrichtung der Einzugswalze werden durch das Edelstahlmaschengewebe die auftretenden Kräfte aufgenommen und abgeleitet. Es wird somit wirksam verhindert, dass diese Kräfte dazu führen, dass über die Zeit Polyurethanmaterial aus diesem Bereich verdrängt wird und es zu Verformungen und Rillenbildung kommt.

Das Edelstahlmaschengewebe 4 ist bevorzugt möglichst nahe unter der Oberfläche der Ummantelung 3 angeordnet. Insbesondere kann eine Anordnung des Edelstahlmaschengewebes 4 direkt oder sehr nahe unter der Oberfläche dazu führen, dass sich auf der Oberfläche leichte Erhebungen und Vertiefungen ausbilden entsprechend der Maschen des Edelstahlmaschengewebes. Dies kann die Oberfläche der Einzugswalze griffiger machen.

Die in Fig. 2 gezeigte Einzugswalze gemäß einer zweiten Ausführungsform der Erfindung unterscheidet sich von der in Fig. 1 gezeigten Ausführungsform nur dadurch, dass das z.B. wie gezeigt rechtwinklig gestaltete Edelstahlmaschengewebe 4 wendelförmig angeordnet ist, im Unterschied zur in Fig. 1 gezeigten Anordnung.

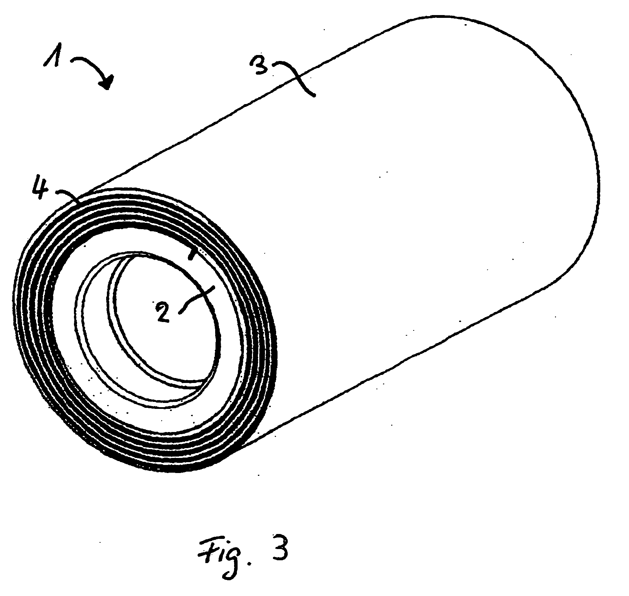

In einer weiteren Ausführungsform, die in der Fig. 3 dargestellt ist, weist die Einzugswalze ein Edelstahlmaschengewebe 4 auf, das spiralförmig auf den Walzenkern 2 aufgewickelt ist. Es ist dabei bevorzugt, dass das Edelstahlmaschengewebe 4 den Walzenkern 2 mehrfach umwickelt. So bildet das Edelstahlmaschengewebe in der Fig. 2 eine Spirale aus, die den Walzenkern fünffach umwickelt. Wie in der Fig. 2 weiter gezeigt, kann der Walzenkern 2 als ein Hohlzylinder aus Edelstahl ausgebildet sein.

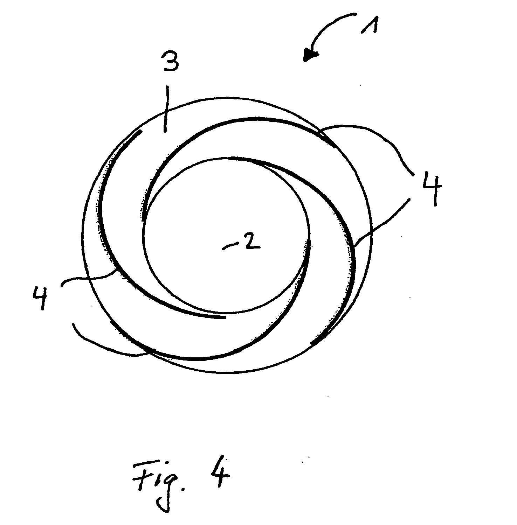

Wie in der weiteren Ausführungsform der Fig. 4 gezeigt, kann auch eine Mehrzahl von zwei, drei, vier oder mehr Metallgeweben verwendet werden, die jeweils, wie in Fig. 4 gezeigt , im Querschnitt gesehen spiralförmig auf den Walzenkern 2 aufgewickelt werden und sich paarweise zumindest teilweise überdecken. Durch die Verwendung von mehreren spiralförmig gewickelten Metallgeweben kann die Wärmeabfuhr in den Walzenkern weiter verbessert werden.

Um eine Einzugswalze gemäß der vorliegenden Erfindung herzustellen, wird zunächst ein metallischer Walzenkern 2 bereitgestellt. Auf dem Walzenkern 2 wird zumindest ein Metallgewebe 4, insbesondere ein Edelstahlmaschengewebe, angeordnet. Das zumindest eine Metallgewebe 4 kann insbesondere spiralförmig auf den Walzenkern 2 aufgewickelt werden. Anschließend wird die Anordnung aus Walzenkern 2 und dem zumindest einen Metallgewebe mit einem Kunststoffmaterial, insbesondere mit Polyurethan, vergossen, um die Ummantelung 3 auszubilden. Das Ausgießen kann unter Verwendung einer hierzu vorgesehenen Gussform stattfinden.

## Patentansprüche

1. Einzugswalze (1) für einen Stranggranulator,
mit einem metallischen Walzenkern (2) und einer auf dem Walzenkern (2) angeordneten Ummantelung (3),
**dadurch gekennzeichnet, dass**
die Ummantelung (3) aus einem Verbund aus einem Kunststoffmaterial und zumindest einem Metallgewebe (4) gebildet ist.

2. Einzugswalze (1) nach Anspruch 1, **dadurch gekennzeichnet, dass** das Kunststoffmaterial Polyurethan ist.

3. Einzugswalze (1) nach einem der vorstehenden Ansprüche, **dadurch gekennzeichnet, dass** das zumindest eine Metallgewebe (4) ein Maschengewebe, bevorzugt ein Edelstahlmaschengewebe ist.

4. Einzugswalze (1) nach einem der vorstehenden Ansprüche, **dadurch gekennzeichnet, dass** das zumindest eine Metallgewebe (4) im Querschnitt gesehen in Form einer Spirale ausgebildet ist.

5. Einzugswalze (1) nach einem der vorstehenden Ansprüche, **dadurch gekennzeichnet, dass** das zumindest eine Metallgewebe (4) in Form einer Wendel ausgebildet ist.

6. Einzugswalze (1) nach Anspruch 4 oder 5, **dadurch gekennzeichnet, dass** das zumindest eine Metallgewebe (4) den Walzenkern (2) zumindest zweifach, dreifach, vierfach oder fünffach umwickelt.

7. Einzugswalze (1) nach einem der vorstehenden Ansprüche, **dadurch gekennzeichnet, dass** die Ummantelung eine Mehrzahl von Metallgeweben (4), insbesondere zwei, drei oder vier Metallgeweben (4) aufweist.

8. Einzugswalze (1) nach einem der vorstehenden Ansprüche, **dadurch gekennzeichnet, dass** das Metallgewebe bzw. eine oberste Lage des Metallgewebes in einem Bereich zwischen 0,5 mm und 5 mm, bevorzugt in einem Bereich zwischen 1 mm und 3 mm unterhalb einer Oberfläche der Einzugswalze (1) angerodnet ist.

9. Einzugswalze (1) nach einem der vorstehenden Ansprüche, **dadurch gekennzeichnet, dass** der Walzenkern (2) aus einem Edelstahl gebildet ist.

10. Einzugswalze (1) nach einem der vorstehenden Ansprüche, **dadurch gekennzeichnet, dass** der Walzenkern (2) als Hohlzylinder ausgebildet ist.

11. Verfahren zur Herstellung einer Einzugswalze (1) nach einem der Ansprüche 1 bis 9, aufweisend die Schritte:
Bereitstellen eines metallischen Walzenkerns (2),
Anordnen eines Metallgewebes auf dem Walzenkern (2), und
Vergießen mit einem Kunststoffmaterial zur Ausbildung der Ummantelung (3).

12. Verfahren nach Anspruch 11, wobei das zumindest eine Metallgewebe ein Edelstahlmaschengewebe ist.

13. Verfahren nach Anspruch 11 oder 12, wobei das Kunststoffmaterial Polyurethan ist.

14. Verfahren nach einem der Ansprüche 11 bis 13, wobei zur Anordnung des Metallgewebes (4) auf dem Walzenkern (2) das zumindest eine Metallgewebe (4) im Querschnitt gesehen spiralförmig auf den Walzenkern (2) aufgewickelt wird.

15. Verfahren nach einem der Ansprüche 11 bis 14, wobei zur Anordnung des Metallgewebes (4) auf dem Walzenkern (2) das zumindest eine Metallgewebe (4) wendelförmig auf den Walzenkern (2) aufgewickelt wird.

16. Stranggranulator zur Verarbeitung von Kunststoffmaterialsträngen zu Granulat, aufweisend zumindest eine Einzugswalze nach einem der Ansprüche 1 bis 10 zum Einziehen der Kunststoffmaterialstränge.

## Claims

1. Feed roll (1) for a strand pelletizer,
having a metallic roll core (2) and a sheathing (3) located on the roll core (2), **characterized in that**
the sheathing (3) is made of a composite of a plastic material and at least one metal mesh (4).

2. Feed roll (1) according to claim 1, **characterized in that** the plastic material is polyurethane.

3. Feed roll (1) according to any one of the preceding claims, **characterized in that** the at least one metal mesh (4) is a woven mesh, preferably a woven stainless steel mesh.

4. Feed roll (1) according to any one of the preceding claims, **characterized in that** the at least one metal mesh (4) is implemented in the shape of a spiral as viewed in cross-section.

5. Feed roll (1) according to any one of the preceding claims, **characterized in that** the at least one metal mesh (4) is implemented in the shape of a helix.

6. Feed roll (1) according to claim 4 or 5, **characterized in that** the at least one metal mesh (4) wraps around the roll core (2) at least twice, three times, four times, or five times.

7. Feed roll (1) according to any one of the preceding claims, **characterized in that** the sheathing has a plurality of metal meshes (4), in particular two, three, or four metal meshes (4).

8. Feed roll (1) according to any one of the preceding claims, **characterized in that** the metal mesh or a topmost layer of the metal mesh is located in a region between 0.5 mm and 5 mm, preferably in a region between 1 mm and 3 mm, below a surface of the feed roll (1).

9. Feed roll (1) according to any one of the preceding claims, **characterized in that** the roll core (2) is made of a stainless steel.

10. Feed roll (1) according to any one of the preceding claims, **characterized in that** the roll core (2) is implemented as a hollow cylinder.

11. Method for producing a feed roll (1) according to any one of claims 1 to 9, having the following steps:
providing a metallic roll core (2),
arranging a metal mesh on the roll core (2), and
molding with a plastic material to form the sheathing (3).

12. Method according to claim 11, wherein the at least one metal mesh is a woven stainless steel mesh.

13. Method according to claim 11 or 12, wherein the plastic material is polyurethane.

14. Method according to any one of claims 11 to 13, wherein the at least one metal mesh (4) is wound onto the roll core (2) in a spiral manner viewed in cross-section to arrange the metal mesh (4) on the roll core (2).

15. Method according to any one of claims 11 to 14, wherein the at least one metal mesh (4) is wound onto the roll core (2) in a helical manner to arrange the metal mesh (4) on the roll core (2).

16. Strand pelletizer for processing strands of plastic material into pellets, having at least one feed roll according to any one of claims 1 to 10 for feeding the strands of plastic material.

## Revendications

1. Cylindre d'alimentation (1) pour un granulateur à joncs,
avec un noyau de cylindre métallique (2) et un enrobage (3) disposé sur le noyau de cylindre (2)
**caractérisé en ce que**
l'enrobage (3) est constitué d'un composite en une matière plastique et au moins une toile métallique (4).

2. Cylindre d'alimentation (1) selon la revendication 1 **caractérisé en ce que** la matière plastique est du polyuréthane.

3. Cylindre d'alimentation (1) selon une des revendications précédentes **caractérisé en ce que** la au moins une toile métallique (4) est une toile à maille, de préférence une toile à mailles en acier inoxydable.

4. Cylindre d'alimentation (1) selon une des revendications précédentes **caractérisé en ce que** la au moins une toile métallique (4) présente vue en coupe une forme de spirale.

5. Cylindre d'alimentation (1) selon une des revendications précédentes **caractérisé en ce que** la au moins une toile métallique (4) a la forme d'une hélice.

6. Cylindre d'alimentation (1) selon la revendication 4 ou 5 précédentes **caractérisé en ce que** la au moins une toile métallique (4) est enroulée autour du noyau de cylindre (2) au moins deux fois, trois fois, quatre fois ou cinq fois.

7. Cylindre d'alimentation (1) selon une des revendications précédentes **caractérisé en ce que** l'enrobage présente une pluralité de toiles métalliques (4), notamment deux, trois ou quatre toiles métalliques (4).

8. Cylindre d'alimentation (1) selon une des revendications précédentes **caractérisé en ce que** la toile métallique ou une couche supérieure de la toile métallique est disposée dans une plage de 0,5 mm et 5 mm, de préférence dans une plage entre 1 mm et 3 mm en-dessous d'une surface du cylindre d'alimentation (1).

9. Cylindre d'alimentation (1) selon une des revendications précédentes **caractérisé en ce que** le noyau du cylindre (2) est en acier inoxydable.

10. Cylindre d'alimentation (1) selon une des revendications précédentes **caractérisé en ce que** le noyau du cylindre (2) a la forme d'un cylindre creux.

11. Procédé pour la fabrication d'un cylindre d'alimentation (1) selon une des revendications 1 à 9, comportant trois étapes :
préparation d'un noyau de cylindre métallique (2)
agencement d'une toile métallique sur le noyau de cylindre (2) et
coulée avec une matière plastique pour former l'enrobage (3).

12. Procédé selon la revendication 11 dans lequel la au moins une toile métallique est une toile métallique à mailles en acier inoxydable.

13. Procédé selon la revendication 11 ou 12, dans lequel la matière plastique est du polyuréthane.

14. Procédé selon la revendication 11 à 13, dans lequel pour disposer la toile métallique (4) sur le noyau du cylindre (2) la au moins une toile métallique (4) vue en coupe est enroulée en forme de spirale sur le noyau du cylindre (2).

15. Procédé selon la revendication 11 à 14, dans lequel pour disposer la toile métallique (4) sur le noyau du cylindre (2), la au moins une toile métallique (4) est enroulée en forme d'hélice sur le noyau du cylindre (2).

16. Granulateur à joncs pour transformer des joncs de matière plastique en granulés présentant au moins un cylindre d'alimentation selon une des revendications 1 à 10 pour alimenter le granulateur en joncs de matière plastique.
